# EUROPÄISCHE PATENTSCHRIFT

(11) **EP 3 642 857 B1**
(45) Veröffentlichungstag und Bekanntmachung des Hinweises auf die Patenterteilung: **07.04.2021**
(21) Anmeldenummer: 18719503.7
(22) Anmeldetag: 17.04.2018
(51) Int. Cl.: H01F 27/28, H01B 1/04, H01F 5/00, H02K 15/04

(54) **ELEKTROMAGNETISCH ERREGBARE SPULE, GRAPHEN UND/ODER CARBON-NANOTUBES UMFASSEND**
ELECTROMAGNETICALLY EXCITABLE COIL
BOBINE À EXCITATION ÉLECTROMAGNÉTIQUE

(30) Priorität: 21.06.2017 DE 102017210441
(43) Veröffentlichungstag der Anmeldung: 29.04.2020
(73) Patentinhaber: Robert Bosch GmbH, 70442 Stuttgart (DE)
(72) Erfinder: KOEHNE, Martin, 71679 Asperg (DE); FINKEN, Thomas, 97877 Wertheim (DE); NEUBAUER, Achim, 76547 Sinzheim-Vormberg (DE); SCHLENSOK, Christoph, 97816 Lohr-Pflochsbach (DE)
(86) Internationale Anmeldenummer: PCT/EP2018/059739
(87) Internationale Veröffentlichungsnummer: WO 2018/233897

(56) Entgegenhaltungen:
- WO-A1-2013/165208
- DE-A1-102013 220 412
- JP-A- 2008 108 583
- US-A1- 2011 005 808
- US-A1- 2016 336 103

## Beschreibung

### Stand der Technik

Die Erfindung geht aus von einer elektromagnetisch erregbaren Spule nach der Gattung des Hauptanspruchs.

Es ist schon eine elektromagnetisch erregbare Spule aus der DE 10 2007 063 413 A1 bekannt, die jeweils durch das Aufwickeln von einem elektrischen Leiter gebildet ist, der Graphen und/oder Carbon-Nanotubes umfasst. Spulen mit bandförmigen elektrischen Leitern, die Carbon-Nanotubes als Leitermaterial enthalten, sind bereits aus JP 2008 108583 A bekannt.

### Vorteile der Erfindung

Die erfindungsgemäße elektromagnetisch erregbare Spule mit den kennzeichnenden Merkmalen des Hauptanspruchs hat demgegenüber den Vorteil, dass die Spule mit einem Leiterband derart herstellbar ist, dass ein für die Spule zur Verfügung stehender Wickelraum optimal ausgenutzt ist. Dies wird erfindungsgemäß erreicht, indem der zumindest eine elektrische Leiter als Leiterband ausgebildet und derart aufgewickelt ist, dass sein Leiterquerschnitt über eine bestimmte Länge gefaltet und/oder abgewinkelt ist. Durch das abschnittsweise Falten des Leiterquerschnitts des Leiterbandes können Stufen in der Wicklung gebildet werden, um eine trapezförmige Spule zu erreichen, die den Wickelraum optimal ausnutzt. Durch das abschnittsweise Abwinkeln und/oder Falten des Leiterbandes kann der Wickelraum mit dem Leiterband optimal bewickelt werden, auch wenn die n-fache Breite des Leiterbandes 2 größer ist als die Wickelraumbreite. Die Erfindung ermöglicht also die Verwendung desgleichen Leiterbandes für verschiedene Wickelraumbreiten. Ist die Spule beispielsweise trapezförmig ausgebildet, können die untersten bzw. innersten Lagen abgewinkelt aufgewickelt sein, während weiter außen liegende Lagen genau zwischen Zahnkopf und Joch passen und daher nicht gefaltet oder abgewinkelt sind. Die äußersten Lagen sind dann beispielsweise gefaltet, um sich der Trapezkontur als ideale Wicklungsgeometrie der Spule optimal anzunähern und einen maximalen Füllgrad zu erreichen.

Durch die in den Unteransprüchen aufgeführten Maßnahmen sind vorteilhafte Weiterbildungen und Verbesserungen der im Hauptanspruch angegebenen elektromagnetisch erregbaren Spule möglich.

Gemäß einer vorteilhaften Ausführung ist das Leiterband teilweise oder vollständig von einer elektrischen Isolation ummantelt. Die isolierende Ummantelung kann insbesondere aus einem Polymer hergestellt sein.

Besonders vorteilhaft ist, wenn das Leiterband eine Unter- und Oberseite aufweist, wobei nur eine dieser beiden Seiten mit der elektrischen Isolation versehen ist. Auf diese Weise kann der Füllfaktor der Spule erhöht und Isolationsmaterial eingespart werden.

Weiterhin vorteilhaft ist, wenn mehrere elektrisch parallele Leiterbänder zur Bildung der Spule aufgewickelt sind. Auf diese Weise wird auf einfache Weise eine Spule erreicht, die mehrere parallele elektrische Leiter umfasst.

Sehr vorteilhaft ist es, wenn bestimmte Lagen desselben Leiterbandes oder Lagen unterschiedlicher Leiterbänder einander überlappen, insbesondere derart, dass eine Stufe überbrückt ist. Auf diese Weise kann für die bewickelte Spule eine weitgehend trapezförmige Außen-Geometrie erzeugt werden, die ohne einzelne Überstände - wie bei Drahtbewicklungen üblich - auskommt. Um dies prozessseitig weiter zu optimieren, kann eine nachträgliche Kalibrierung der bewickelten Spule im Leiterbandbereich durchgeführt werden, die die Leiterbänder über die Stufe an die darunterliegende Leiterbahn andrückt und Überstände durch Ungenauigkeiten beim Bewickeln egalisiert sowie die mehrschichtigen Leiterbahnen komprimiert.

Auch vorteilhaft ist, wenn die Spule auf ein Isolierelement aufgewickelt ist, das ein Isolationspapier, eine Beschichtung oder ein Wickelkörper ist und an seinem Umfang eine bestimmte, insbesondere wellige oder sägezahnförmige Kontur aufweist. Auf diese Weise kann dem Leiterband eine dementsprechend korrespondierende Kontur aufgezwungen werden, die sich einerseits über die Lagen des Leiterbandes fortpflanzt und zu einem geordneten Lagenaufbau mit höchstem Füllfaktor führt und andererseits sich an unterschiedliche Breiten des Leiterbandes für die gleiche Zahngeometrie anpassen kann. Die Kontur des Isolierelementes ermöglicht die Nutzung verschiedener Leiterquerschnitte, so dass unterschiedliche Kennlinien bei gleicher Segmentgeometrie erreicht werden können. Durch die ideale Anpassung der superdünnen Leiterbänder an die Kontur des Isolierelementes können mit dem gleichen Zahnsegment und unterschiedlichen Leiterbandbreiten unterschiedliche Kennlinien erzielt werden, nämlich derart, dass z.B. das Moment am Eckpunkt mit der Leiterbandbreite ansteigt und der Feldschwächbereich steiler abfällt. Verwendet man einseitig isolierte Leiterbänder, sind durch die Kontur des Isolierelementes auch mit gleicher Leiterbandbreite zumindest zwei unterschiedliche Kennlinien erreichbar, indem einmal die Leiterbänder so aufeinander gewickelt werden, dass sich zwei aufeinanderfolgende Leiter gegenseitig isolieren und im anderen Fall so, dass sie sich kurzschließen - damit also den doppelten Leiterquerschnitt haben und damit eine andere Kennlinie.

Desweiteren vorteilhaft ist, wenn die Enden jeder elektrischen Spule mit Enden anderer Spulen verbunden sind, insbesondere verknotet, verdrillt oder durch van der Waals-Kräfte verbunden sind. Auf diese Weise wird die elektrische Anbindung der Spulen vereinfacht.

### Zeichnung

Zwei Ausführungsbeispiele der Erfindung sind in der Zeichnung vereinfacht dargestellt und in der nachfolgenden Beschreibung näher erläutert.
Fig.1 zeigt im Schnitt eine Spule gemäß einem ersten Ausführungsbeispiel und
Fig.2 eine Spule gemäß einem zweiten Ausführungsbeispiel.

### Beschreibung der Ausführungsbeispiele

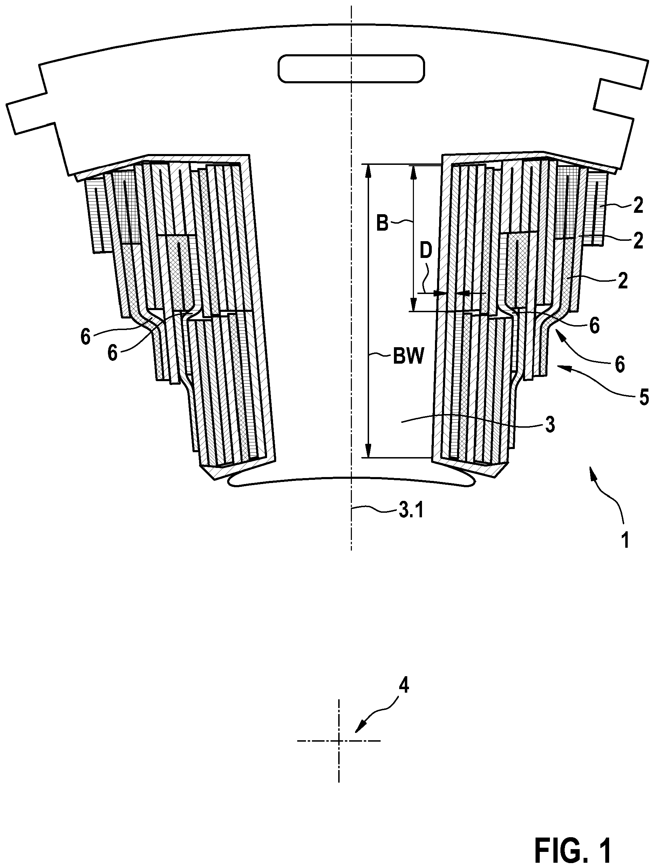

Fig.1 zeigt im Schnitt eine Spule gemäß einem ersten Ausführungsbeispiel.

Die elektromagnetisch erregbare Spule 1 ist durch das Aufwickeln von zumindest einem elektrischen Leiter 2 gebildet, der Graphen und/oder Carbon-Nanotubes umfasst. Zur Bildung der Spule kann ein einziger elektrischer Leiter 2 vorgesehen oder mehrere elektrisch parallele Leiter 2 übereinanderliegend aufgewickelt sein. Die Spule 1 umschließt beispielsweise einen Spulenkern 3, der beispielsweise ein Zahn eines Stator- oder Rotorblechpakets einer elektrischen Maschine sein kann und eine Kernachse 3.1 aufweist, die in Richtung der Längserstreckung des Spulenkerns 3 verläuft. Bei einer elektrischen Maschine verläuft die Kernachse 3.1 in radialer Richtung bezüglich einer Stator- und/oder Rotorachse 4. Der Spulenkern 3 ist beispielsweise in herkömmlicher Weise als Lamellenpaket ausgebildet.

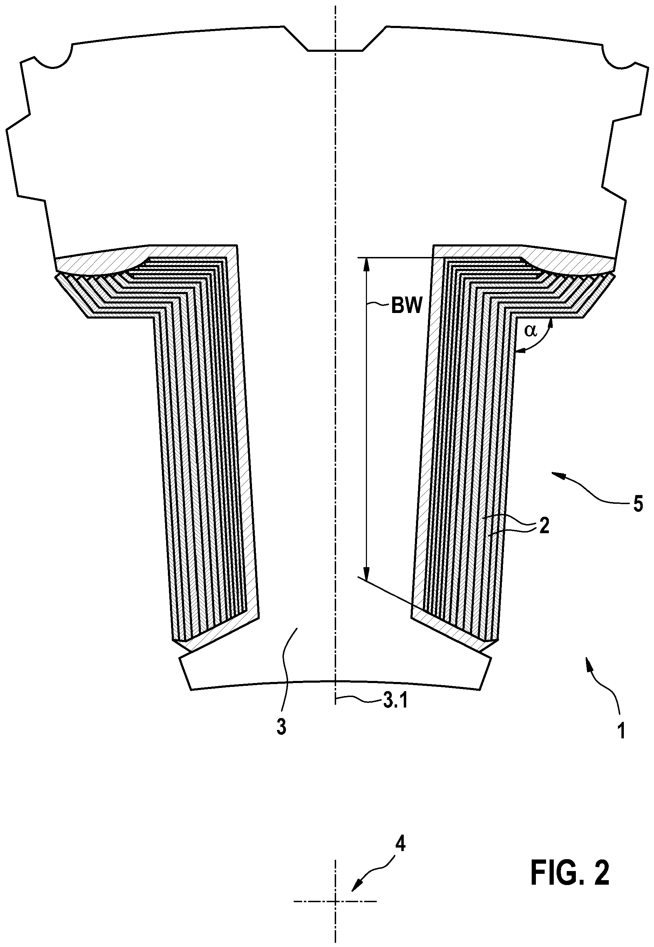

Erfindungsgemäß ist vorgesehen, dass der zumindest eine elektrische Leiter 2 der Spule 1 als Leiterband ausgebildet und derart aufgewickelt ist, dass sein Leiterquerschnitt über eine bestimmte Länge gefaltet (Fig.1) und/oder abgewinkelt (Fig.2) ist. Auf diese Weise kann das Leiterband 2 derart aufgewickelt werden, dass ein für die Spule 1 zur Verfügung stehender Wickelraum 5 optimal ausgenutzt ist und für die Anwendung bei einer elektrischen Maschine ein hoher Füllfaktor erreicht wird. Der Wickelraum 5 hat eine in Richtung der Kernachse 3.1 gemessene Wickelraumbreite BW und eine quer zur Kernachse 3.1 gemessene Wickelraumhöhe. Das Leiterband 2 ist als Flachband ausgebildet, das eine Breite B und eine Dicke D aufweist, wobei die Breite B um ein Vielfaches größer ist als die Dicke D. Durch das Falten oder Abwinkeln des Leiterquerschnitts kann die n-fache Breite des Leiterbandes 2 größer sein als die Wickelraumbreite BW bzw. als ein Minimal- und/oder Maximalwert der Wickelraumbreite BW, beispielsweise für den Fall n=1, wenn die Lagen des Leiterbandes 2 ausschließlich übereinander in Richtung quer zur Kernachse 3.1 und nicht nebeneinander aufgewickelt werden, oder für den Fall n>1, wenn die Lagen des Leiterbandes n-fach nebeneinander angeordnet sind und übereinander aufgewickelt sind.

Der gefaltete Leiterquerschnitt des Leiterbandes 2 ist nach dem ersten Ausführungsbeispiel um 180 Grad umgefaltet. Beispielsweise ist der Leiterquerschnitt des Leiterbandes 2 in seiner Mitte um 180 Grad umgefaltet, so dass die gefalteten Schenkel des Leiterquerschnittes des Leiterbandes 2 gleich lang sind. Der Leiterquerschnitt des Leiterbandes 2 kann aber auch unsymmetrisch gefaltet sein, dass die gefalteten Schenkel des Leiterquerschnittes des Leiterbandes 2 ungleich lang sind. Die Faltung des Leiterquerschnittes des Leiterbandes 2 verläuft über eine oder mehrere volle, also über 360 Grad verlaufende Windungen, damit eine bezüglich der Kernachse 3.1 im wesentlichen symmetrische Spule 1 entsteht.

Das Leiterband 2 ist aus einem Verbund von Fasern gebildet. Die Fasern des Leiterbandes 2 enthalten Kohlenstoffnanoröhren und/oder eine Vielzahl von Schichten aus Graphen. Insbesondere sind die Fasern des Leiterbandes 2 aus Kohlenstoffnanoröhren und/oder aus einer Vielzahl von Schichten aus Graphen hergestellt. Das Leiterband 2 weist eine elektrische Isolation, die aus einem Polymer bestehen oder hergestellt und als Ummantelung ausgeführt sein kann. Das Leiterband 2 hat eine Unter- und Oberseite, jeweils mit der Breite B, wobei nur eine dieser beiden Seiten mit der elektrischen Isolation versehen sein kann, um die aneinanderliegenden Lagen des Leiterbandes 2 gegeneinander elektrisch zu isolieren. Außerdem können jeweils zwei einseitig isolierte Leiterbänder 2 so aufeinander gewickelt werden, dass die nicht isolierten Seiten im Bereich eines Zahnhalses des Zahns 3 aufeinander zu liegen kommen, beispielsweise durch 180° Verdrehung im Wickelkopfbereich.

Bestimmte Lagen desselben Leiterbandes 2 oder bestimmte Lagen unterschiedlicher Leiterbänder 2 können einander überlappen, insbesondere derart, dass eine Stufe 6 in der Wicklung der Spule 1 überbrückt ist.

Die Spule 1 ist beispielsweise auf ein Isolierelement 8 aufgewickelt, das ein Isolationspapier, eine Beschichtung oder ein Wickelkörper sein kann. Dieses Isolierelement 8 kann an seinem Umfang eine bestimmte, insbesondere wellige oder sägezahnförmige Kontur aufweisen, an die sich das Leiterband aufgrund seiner geringen Dicke und seiner Biegeschlaffheit korrespondierend derart anpasst, dass sich diese Kontur des Isolierelementes 8 über alle Lagen des Leiterbandes 2 fortpflanzt. Durch das Anpassen des Leiterbandes 2 an die Kontur des Isolierelementes 8 hat die Spule 1 eine geringere Breite als das ebene Leiterband 2.

Fig.2 zeigt eine Spule gemäß einem zweiten Ausführungsbeispiel. Bei der Spule nach Fig.2 sind die gegenüber der Spule nach Fig.1 gleichbleibenden oder gleichwirkenden Teile durch die gleichen Bezugszeichen gekennzeichnet.
Bei dem zweiten Ausführungsbeispiel sind die Lagen des Leiterbandes 2 für den Fall n=1 ausschließlich übereinander aufgewickelt und ist die Breite des Leiterbandes 2 größer als die Wickelraumbreite BW. Um das Leiterband 2 mit dieser Breite trotzdem einsetzen zu können, ist der Leiterquerschnitt des Leiterbandes 2 beispielsweise über alle Lagen und beispielsweise am Fuß des Spulenkerns 3 um einen Winkel α abgewinkelt. Der Nutzen solcher gezielter Geometrien liegt in der Anpassung an zur Verfügung stehende Wickelräume. Im vorliegenden Fall wird zur absolut sicheren Vermeidung von Kurzschlüssen in die gebildete Geometrieaussparung der Wicklung ein Isolierkörper, beispielsweise ein Kunststoff-Trennflügel, zwischen benachbarte bewickelte Spulen eingebracht, der mit dem Isolierelement radial innen und radial außen bündig abschließt und durch die Geometrie radial fixiert ist.

Die erfindungsgemäße Spule gemäß den beiden Ausführungsbeispielen nach Fig.1 und Fig.2 kann jeweils an den Zähnen eines Rotors oder eines Stator einer elektrischen Maschine vorgesehen sein. Beispielsweise kann die in Fig.1 oder Fig.2 gezeigte Anordnung in Umfangsrichtung bezüglich der Achse 4 mehrfach hintereinander angeordnet werden, um einen Stator zu bilden. An der elektrischen Maschine sind die Enden jeder elektrischen Spule 1 mit Enden anderer Spulen 1 verbunden, insbesondere verknotet, verdrillt oder durch van der Waals-Kräfte verbunden. Alternativ kann zwischen benachbarten Spulen gleicher Phase durchgewickelt werden.

## Patentansprüche

1. Elektromagnetisch erregbare Spule (1), die jeweils durch das Aufwickeln von zumindest einem elektrischen Leiter (2) gebildet ist, der Graphen und/oder Carbon-Nanotubes umfasst, wobei der zumindest eine elektrische Leiter (2) als Leiterband ausgebildet ist, **dadurch gekennzeichnet, dass** der zumindest eine elektrische Leiter derart aufgewickelt ist, dass sein Leiterquerschnitt über eine bestimmte Länge gefaltet und/oder abgewinkelt ist.

2. Spule nach Anspruch 1, **dadurch gekennzeichnet, dass** das Leiterband (2) eine elektrische Isolation, insbesondere aus einem Polymer, aufweist.

3. Spule nach Anspruch 2, **dadurch gekennzeichnet, dass** das Leiterband (2) eine Unter- und Oberseite aufweist, wobei nur eine der beiden Seiten mit der elektrischen Isolation versehen ist.

4. Spule nach einem der vorhergehenden Ansprüche, **dadurch gekennzeichnet, dass** mehrere elektrisch parallele Leiterbänder (2) zur Bildung der Spule (1) aufgewickelt sind.

5. Spule nach Anspruch 3 und 4, **dadurch gekennzeichnet, dass** jeweils zwei einseitig isolierte Leiterbänder (2) so aufeinander gewickelt werden, dass die nicht isolierten Seiten aufeinander zu liegen kommen.

6. Spule nach Anspruch 4, **dadurch gekennzeichnet, dass** bestimmte Lagen desselben Leiterbandes (2) oder Lagen unterschiedlicher Leiterbänder (2) einander überlappen, insbesondere derart, dass eine Stufe (6) in der Wicklung überbrückt ist.

7. Spule nach einem der vorhergehenden Ansprüche, **dadurch gekennzeichnet, dass** die Spule (1) auf ein Isolierelement (8) aufgewickelt ist, das ein Isolationspapier, eine Beschichtung oder ein Wickelkörper ist und an seinem Umfang eine bestimmte, insbesondere wellige oder sägezahnförmige Kontur aufweist.

8. Spule nach einem der vorhergehenden Ansprüche, **dadurch gekennzeichnet, dass** das Leiterband (2) ein Flachband ist, das eine Breite (B) und eine Dicke (D) aufweist, wobei die Breite (B) um ein Vielfaches größer ist als die Dicke (D).

9. Spule nach einem der vorhergehenden Ansprüche, **dadurch gekennzeichnet, dass** das Leiterband (2) ein Verbund von Fasern ist, die Kohlenstoffnanoröhren und/oder eine Vielzahl von Schichten aus Graphen umfassen.

10. Elektrische Komponente einer elektrischen Maschine, insbesondere Rotor oder Stator, mit Zähnen (3), an denen jeweils eine Spule (1) nach einem der vorhergehenden Ansprüche vorgesehen ist.

11. Elektrische Komponente nach Anspruch 10, **dadurch gekennzeichnet, dass** die Enden jeder elektrischen Spule (1) mit Enden anderer Spulen (1) verbunden sind, insbesondere verknotet, verdrillt oder durch van der Waals-Kräfte verbunden sind.

## Claims

1. Electromagnetically excitable coil (1) which is formed in each case by winding at least one electrical conductor (2) which comprises graphene and/or carbon nanotubes, wherein the at least one electrical conductor (2) is designed as a conductor strip, **characterized in that** the at least one electrical conductor is wound in such a way that its conductor cross section is folded and/or bent over a certain length.

2. Coil according to Claim 1, **characterized in that** the conductor strip (2) has an electrical insulation, in particular composed of a polymer.

3. Coil according to Claim 2, **characterized in that** the conductor strip (2) has a bottom side and top side, wherein only one of the two sides is provided with the electrical insulation.

4. Coil according to one of the preceding claims, **characterized in that** a plurality of electrically parallel conductor strips (2) are wound for forming the coil (1).

5. Coil according to Claims 3 and 4, **characterized in that** in each case two conductor strips (2) which are insulated on one side are wound one onto the other such that the non-insulated sides come to lie one on the

6. Coil according to Claim 4, **characterized in that** certain layers of the same conductor strip (2) or layers of different conductor strips (2) overlap one another, in particular in such a way that a step (6) in the winding is bridged.

7. Coil according to one of the preceding claims, **characterized in that** the coil (1) is wound onto an insulating element (8) which is an insulation paper, a coating or a coil former and has, on its periphery, a certain, in particular wave-like or sawtooth-shaped, contour.

8. Coil according to one of the preceding claims, **characterized in that** the conductor strip (2) is a flat strip which has a width (B) and a thickness (D), wherein the width (B) is several times greater than the thickness (D).

9. Coil according to one of the preceding claims, **characterized in that** the conductor strip (2) is a composite of fibers which comprise carbon nanotubes and/or a large number of layers of graphene.

10. Electrical component of an electrical machine, in particular rotor or stator, with teeth (3) on each of which a coil (1) according to one of the preceding claims is provided.

11. Electrical component according to Claim 10, **characterized in that** the ends of each electrical coil (1) are connected to ends of other coils (1), in particular are knotted, twisted or connected by van der Waals forces.

## Revendications

1. Bobine à excitation électromagnétique (1), qui est formée respectivement par enroulement d'au moins un conducteur électrique (2) qui comprend du graphène et/ou des nanotubes de carbone, ledit au moins un conducteur électrique (2) étant réalisé sous la forme d'une bande conductrice, **caractérisée en ce que** ledit au moins un conducteur électrique est enroulé de telle sorte que sa section transversale de conducteur est pliée et/ou coudée sur une certaine longueur.

2. Bobine selon la revendication 1, **caractérisée en ce que** la bande conductrice (2) présente une isolation électrique, en particulier en polymère.

3. Bobine selon la revendication 2, **caractérisée en ce que** la bande conductrice (2) présente une face inférieure et une face supérieure, une seule des deux faces étant munie de l'isolation électrique.

4. Bobine selon l'une quelconque des revendications précédentes, **caractérisée en ce que** plusieurs bandes conductrices (2) électriquement parallèles sont enroulées pour former la bobine (1).

5. Bobine selon les revendications 3 et 4, **caractérisée en ce que** respectivement deux bandes conductrices (2), isolées sur une seule face, sont enroulées l'une sur l'autre de telle sorte que les faces non isolées sont superposées.

6. Bobine selon la revendication 4, **caractérisée en ce que** certaines couches de la même bande conductrice (2) ou des couches de différentes bandes conductrices (2) se chevauchent, en particulier de façon à recouvrir un gradin (6) dans l'enroulement.

7. Bobine selon l'une quelconque des revendications précédentes, **caractérisée en ce que** la bobine (1) est enroulée sur un élément isolant (8) qui est un papier isolant, un revêtement ou une bobine et présente sur sa circonférence un certain contour, en particulier ondulé ou en dents de scie.

8. Bobine selon l'une quelconque des revendications précédentes, **caractérisée en ce que** la bande conductrice (2) est une bande plate qui présente une largeur (B) et une épaisseur (D), la largeur (B) étant plusieurs fois supérieure à l'épaisseur (D).

9. Bobine selon l'une quelconque des revendications précédentes, **caractérisée en ce que** la bande conductrice (2) est un composite de fibres qui comprennent des nanotubes de carbone et/ou une pluralité de couches de graphène.

10. Composant électrique d'une machine électrique, en particulier un rotor ou un stator, doté de dents (3) sur lesquelles respectivement une bobine (1) selon l'une quelconque des revendications précédentes est prévue.

11. Composant électrique selon la revendication 10, **caractérisé en ce que** les extrémités de chaque bobine électrique (1) sont reliées aux extrémités d'autres bobines (1), en particulier nouées, torsadées ou reliées par des forces de Van-der-Waals.
